(19) Europäisches Patentamt / European Patent Office / Office européen des brevets

(11) **EP 2 112 363 B1**

(12) **EUROPÄISCHE PATENTSCHRIFT**

(45) Veröffentlichungstag und Bekanntmachung des Hinweises auf die Patenterteilung:
**30.03.2016 Patentblatt 2016/13**

(51) Int Cl.:
***F02M 21/02*** *(2006.01)*

(21) Anmeldenummer: **09158218.9**

(22) Anmeldetag: **20.04.2009**

(54) **Gastank-Entleerungs-System zur Entleerung von Gasdruckbehältern**

Gas tank emptying system for emptying gas pressure containers

Système de vidage de réservoir de gaz destiné à vider des récipients à gaz sous pression

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **23.04.2008 DE 102008020803**

(43) Veröffentlichungstag der Anmeldung:
**28.10.2009 Patentblatt 2009/44**

(73) Patentinhaber: **Volkswagen Aktiengesellschaft 38440 Wolfsburg (DE)**

(72) Erfinder:
• **Leifheit, Dipl.-Ing. Matthias 38154, Königslutter (DE)**
• **Goerke, Dipl.-Ing. Christian 38542, Leiferde (DE)**
• **Behlendorf, Uwe 38527, Meine (DE)**
• **Almkermann, Dr.-Ing. Jens Arik 31234, Edemissen (DE)**

(74) Vertreter: **Gulde & Partner Patent- und Rechtsanwaltskanzlei mbB Wallstraße 58/59 10179 Berlin (DE)**

(56) Entgegenhaltungen:
**DE-A1- 10 301 159      DE-A1- 19 818 306 GB-A- 1 440 318**

**Beschreibung**

Die Erfindung betrifft ein Gastank-Entleerungs-System zur Unterdruckentleerung von Gasdruckbehältern mit den im Oberbegriff des Anspruchs 1 genannten Merkmalen, ein Verfahren zum Betreiben dieses Gastank-Entleerungs-Systems und ein Transportmittel mit einem Gastank-Entleerungs-System mit den im Oberbegriff des Anspruchs 16 genannten Merkmalen.

Es ist bekannt, dass insbesondere in Fahrzeugen zunehmend Gaskraftstoffe anstelle der flüssigen Kraftstoffe eingesetzt werden, um den Ausstoß von schädlichen Gasen wie $CO_2$ weiter zu reduzieren. In der Regel werden gasförmige Kraftstoffe komprimiert unter Hochdruck im Fahrzeug mitgeführt. Erdgas z. B. mit einem Nenndruck von 200 bar. Das Gas wird in einem oder mehreren Gasdruckbehältern im gasförmigen Aggregatzustand unter Druck gespeichert und über ein Zuleitungssystem einem Druckregler zugeführt, welcher in der Lage ist, den Druck zu reduzieren und gleichzeitig auch auf einen zu der aktuellen Leistung des angetriebenen Verbrennungsmotors korrespondierenden Wert einzustellen. Der Druck des Gaskraftstoffs in einem dem Druckregler nachgeschalteten Gaskraftstoffverteiler kann beispielsweise in einem Bereich zwischen 5 und 10 bar liegen, je nach Leistungsabgabe des Verbrennungsmotors, wobei für die maximale Leistungsabgabe ein Gasdruck von ungefähr 10 bar erforderlich ist. Der Druckregler weist eine Regelabweichung zwischen seinem eingangsseitigen und ausgangsseitigen Druckwerten auf, die dazu führt, dass der Druck auf der Eingangsseite und somit in den Gasdruckbehältern um etwa 2 bar höher, d.h. beispielsweise bei 12 bar liegen muss, damit der Verbrennungsmotor auch bei vorkommenden Leistungsspitzen mit genügend Gaskraftstoff versorgt sein kann.

Diese physikalischen Gegebenheiten führen dazu, dass der oder die Gasdruckbehälter prinzipiell nicht auf einen Druckwert unterhalb von 10 bzw. 12 bar entleert werden können und folglich eine restliche Gaskraftstoffmenge beibehalten. Am Beispiel eines Fahrzeugs mit vier Zylindern identischen Inhalts mit jeweils 40 Litern Volumen ergibt sich eine Gesamtfüllmenge an Methan (G20) von 27,4kg bei 200bar Fülldruck. Bei einem Restdruck von 10 bar verbleiben üblicherweise 1,1 kg Gaskraftstoff ungenutzt im Tanksystem. Diese ungenutzte Gasmenge entspricht einem zusätzlichen ständig mitgeführten Gewicht, wobei das beanspruchte Volumen des jeweiligen Gasdruckbehälters und dadurch sein Eigengewicht ebenso entsprechend höher ausfallen müssen.

Eine konventionelle Möglichkeit, die Restmenge des Gaskraftstoffs aus den Gasdruckbehältern zu entleeren, bestünde darin, eine Pumpvorrichtung bzw. einen Kompressor zu verwenden. Diese Lösung wäre aber mit erheblichen Nachteilen verbunden, da eine in der Herstellung relativ teure Pumpvorrichtung bzw. ein Kompressor benötigt wird, die oder der angetrieben werden muss, wodurch von der erzeugten Leistung des Verbrennungsmotors ein Teil zum Antreiben dieser Pumpvorrichtung aufgewendet werden muss. Ein solch großer Aufwand lohnt sich nicht bei Kraftfahrzeugen und wird daher in der Regel nicht betrieben.

Die DE 699 27 179 T2 liefert den allgemeinen technologischen Hintergrund zu gasbetriebenen Verbrennungsmotoren, die speziell die Verbesserung des Druckminderers zum Ziel hat.

DE 10301159 offenbart ein Kraftfahrzeug mit einer Brennkraftmaschine für unter Normalbedingungen gasförmigen Kraftstoff und ein Verfahren zu deren Versorgung.

Der Erfindung liegt die Aufgabe zugrunde, eine preiswerte Möglichkeit bereitzustellen, Gasdruckbehälter für ein gasbetriebenes Verbrennungsmotor-System, auf einen niedrigeren Druckwert als der Betriebsdruck des Gaskraftstoffs zu entleeren und hierbei möglichst wenig zusätzliches Gewicht zu verursachen.

Nach einem ersten Aspekt vorliegender Erfindung geht diese von einem Gastank-Entleerungs-System zur Entleerung von Gasdruckbehältern in einem gasbetriebenen Verbrennungsmotor-System aus, aufweisend mehr als einen Gasdruckbehälter und eine Kraftstoffleitung. Dadurch, dass wenigstens einer der Gasdruckbehälter als ein antreibender Gasdruckbehälter zum Antreiben eines Unterdruckerzeugungsmittels vorgesehen ist, welches zum Rest-Entleeren des wenigstens einen anderen, zu entleerenden Gasdruckbehälters vorgesehen ist, sind die Aufgaben der vorliegenden Erfindung gelöst.

Weitere bevorzugte Ausgestaltungen der Erfindung ergeben sich aus den übrigen, in den Unteransprüchen genannten Merkmalen.

Gemäß einer bevorzugten Ausgestaltung der vorliegenden Erfindung ist das Unterdruckerzeugungsmittel als wenigstens eine Venturi-Düse ausgeführt, die von dem wenigstens einen Gasdruckbehälter mit einer Gasströmung in ihrer Hauptflussrichtung durchströmbar ist und einen quer zur Hauptflussrichtung angeordneten Ansauganschluss aufweist. Hierbei wird das bekannte Prinzip ausgenutzt, dass eine Strömung einen dynamischen Druckanteil aufweist und folglich der statische Druckanteil aufgrund der Drucksummenerhaltung absinkt. Dieser statische Druckanteil ist genau in Querrichtung zur Strömung messbar, sodass in dem Ansauganschluss der Venturi-Düse ein gegenüber dem Druck in der Venturi-Düse herabgesenkter Druckwert erzeugt wird und dadurch eine Saugwirkung erreicht ist. Eine Venturi-Düse ist ein sehr einfaches, einstückig herstellbares Bauelement ohne mechanisch bewegliche Teile, wodurch sie geringe zusätzliche Herstellkosten und ein geringes zusätzliches Gewicht bewirkt.

Gemäß einer weiteren bevorzugten Ausgestaltung der vorliegenden Erfindung ist das Unterdruckerzeugungsmittel mit einer Vielzahl von Venturi-Düsen ausgebildet, die zueinander parallel angeordnet und mithilfe wenigstens eines Schaltmittels in einer beliebigen Zusammensetzung zuschaltbar ausgeführt sind, wobei die Steuerung der Zuschaltungszusammensetzung der Venturi-Düsen mit der Wirkleistung des Verbrennungsmotors verknüpfbar ist. Bei dieser Lösung betreibt der antreibende Gasdruckbehälter ständig die Entnahme des Gaskraftstoffs aus dem wenigstens einen zu entleerenden Gasdruckbehälter, wodurch ein Problem entsteht, wenn von dem Verbrennungsmotor besonders wenig Leistung abverlangt wird und dadurch der Durchfluss des Gaskraftstoffs verringert wird. In diesem Fall sinkt die Saugleistung der Venturi-Düse und es fließt folglich mehr Gaskraftstoff aus dem antreibenden Gasdruckbehälter als aus dem zu entleerenden Gasdruckbehälter. Durch das Zuschalten eines oder mehrerer weiterer Venturi-Düsen wird der Durchfluss und damit die gesamte Saugleistung erhöht und somit das oben beschriebene Problem beseitigt.

Eine noch bessere Alternative ist gemäß einer weiteren bevorzugten Ausgestaltung der vorliegenden Erfindung gegeben, wobei die wenigstens eine Venturi-Düse mithilfe einer Stellventil-Einheit derart mit dem wenigstens einen antreibenden Gasdruckbehälter und dem wenigstens einen zu entleerenden Gasdruckbehälter verschaltbar ist, dass bei einem ersten Betriebszustand der antreibende Gasdruckbehälter und die Venturi-Düse von der Kraftstoffleitung abgekoppelt sind und der wenigstens eine zu entleerende Gasdruckbehälter direkt an die Kraftstoffleitung angeschlossen ist, und bei einem zweiten Betriebszustand der antreibende Gasdruckbehälter und die Venturi-Düse an die Kraftstoffleitung angeschlossen sind und der zu entleerende Gasdruckbehälter an den Ansauganschluss der Venturi-Düse angeschlossen ist. In diesem Fall wird der antreibende Gasdruckbehälter zunächst abgekoppelt und behält seine volle Gasladung, solange in dem oder den zu entleerenden Gasdruckbehälter/n genügend Druck vorhanden ist, um die Funktion des Druckreglers aufrechtzuerhalten und dadurch den Verbrennungsmotor ausreichend mit dem Gaskraftstoff zu versorgen. Erst nachdem der zu entleerende Gasdruckbehälter bis auf den kritischen Druckwert durch einen normalen Betrieb entleert worden ist, wird erfindungsgemäß der antreibende Gasdruckbehälter mit der Venturi-Düse so zugeschaltet, dass der oder die zu entleerende/n Gasdruckbehälter mit dem Ansauganschluss der Venturi-Düse verbunden werden. Der an dem Ansauganschluss der Venturi-Düse erzeugte relative Unterdruck führt dazu, dass aus dem/den zu entleerenden Gasdruckbehälter/n Gaskraftstoff weiterhin entleert wird und der Druck darin deutlich abgesenkt werden kann. Beispielsweise ist dadurch ein Druckwert von etwa 2 bar erreichbar.

Die Stellventil-Einheit weist in einer bevorzugten weiteren Ausgestaltung der vorliegenden Erfindung wenigstens ein 1/3-Wegeventil auf. Solche Dreiwegeventile sind bekannte Standardelemente und sind daher preiswert einsetzbar. Zum Umschalten kann beispielsweise ein elektromagnetischer Antrieb verwendet sein.

Gemäß einer bevorzugten Ausgestaltung der vorliegenden Erfindung weist der antreibende Gasdruckbehälter ein geringeres Volumen als ein zu entleerender Gasdruckbehälter auf. Dadurch kann erreicht werden, dass auch die in diesem antreibenden Gasdruckbehälter nach seinem Entleeren verbleibende Gaskraftstoff-Restmenge kleiner ausfallen kann. Der antreibende Gasdruckbehälter kann nicht entleeret werden und hat daher den restlichen Betriebsdruck von beispielsweise 10-12 bar.

In einer weiteren bevorzugten Ausgestaltung der vorliegenden Erfindung ist ein zusätzliches Sekundärkraftstoffsystem zum Speisen des Verbrennungsmotor-Systems mit einem alternativen Kraftstoff zuschaltbar. Das ist oftmals ein Notversorgungssystem, kann aber auch ein gleichwertig verwendetes System sein.

Der Kraftstoff des zusätzlichen Sekundärkraftstoffsystems ist gemäß einer bevorzugten Ausgestaltung der vorliegenden Erfindung dem Verbrennungsmotor in einem beliebigen Mischverhältnis mit dem Gaskraftstoff aus den Gasdruckbehältern oder jeweils einzeln zuführbar. Das ermöglicht bei Lastspitzen und hierbei unzureichendem Druck des Gaskraftstoffs eine Kompensation des Mangels durch Hinzufügen des alternativen Kraftstoffs, beispielsweise des Benzins.

In einer weiteren bevorzugten Ausgestaltung der vorliegenden Erfindung liegt das in dem gasbetriebenen Verbrennungsmotor-System verwendete Gas im gasförmigen Aggregatzustand in den Gasdruckbehältern vor, wobei es eines von den Gasen wie Erdgas, Wasserstoff, Methan oder eine beliebige Zusammensetzung davon ist.

Vorzugsweise liegt der in einem Zuführungsstrang des gasbetriebenen Verbrennungsmotor-Systems herrschende Gasdruck im Bereich von ungefähr 5 bis 10 bar.

Der wenigstens eine zu entleerende Gasdruckbehälter ist vorzugsweise auf einen Restdruck von höchstens 2 bar oder weniger entleerbar.

Nach einem zweiten Aspekt vorliegender Erfindung geht sie von einem Verfahren zum Entleeren von Gasdruckbehältern in einem gasbetriebenen Verbrennungsmotor-System aus, aufweisend mehr als einen Gasdruckbehälter und eine Kraftstoffleitung.

Die Aufgaben der vorliegenden Erfindung sind nach diesem Aspekt der vorliegenden Erfindung dadurch erreicht, dass wenigstens eines der Gasdruckbehälter als ein antreibender Gasdruckbehälter zum Antreiben eines Unterdruckerzeugungsmittels verwendet wird, welches zum Rest-Entleeren des wenigstens einen anderen, zu entleerenden Gasdruckbehälters eingesetzt wird.

Gemäß einer bevorzugten Ausgestaltung des Verfahrens nach vorliegender Erfindung ist das Unterdruckerzeugungsmittel als wenigstens eine Venturi-Düse ausgeführt, die von dem wenigstens einen Gasdruckbehälter mit einer Gasströmung in ihrer Hauptflussrichtung durchströmt werden kann und weist einen quer zur Hauptflussrichtung angeordneten Ansauganschluss auf.

In einer weiteren bevorzugten Ausgestaltung der vorliegenden Erfindung wird das Unterdruckerzeugungsmittel mit einer Vielzahl von Venturi-Düsen ausgebildet, die zueinander parallel angeordnet und mithilfe wenigstens eines Schaltmittels in einer beliebigen Zusammensetzung zugeschaltet werden können, wobei die Steuerung der Zuschaltungszusammensetzung der Venturi-Düsen mit der Wirkleistung des Verbrennungsmotors verknüpft wird. Wenn die von dem Verbrennungsmotor abverlangte Leistung sinkt, müssen zusätzliche Venturi-Düsen hinzugeschaltet werden, um dadurch die mit dem verringerten Gasfluss absinkende Saugleistung einer Venturi-Düse auszugleichen.

Vorzugsweise kann die wenigstens eine Venturi-Düse mithilfe einer Stellventil-Einheit derart mit dem wenigstens einen antreibenden Gasdruckbehälter und dem wenigstens einen zu entleerenden Gasdruckbehälter verschaltet werden, dass bei einem ersten Betriebszustand der antreibende Gasdruckbehälter und die Venturi-Düse von der Kraftstoffleitung abgekoppelt werden und der wenigstens eine zu entleerende Gasdruckbehälter direkt an die Kraftstoffleitung angeschlossen wird, und bei einem zweiten Betriebszustand der antreibende Gasdruckbehälter und die Venturi-Düse an die Kraftstoffleitung angeschlossen werden, und der zu entleerende Gasdruckbehälter wird an den Ansauganschluss der Venturi-Düse angeschlossen.

Vorzugsweise verwendet das erfindungsgemäße Verfahren die Stellventil-Einheit mit wenigstens einem 1/3-Wegeventil und ferner einen antreibenden Gasdruckbehälter mit einem geringeren Volumen als ein zu entleerender Gasdruckbehälter.

Gemäß einer bevorzugten weiteren Ausgestaltung des Verfahrens nach vorliegender Erfindung kann ein zusätzliches Sekundärkraftstoffsystem zum Speisen des Verbrennungsmotor-Systems mit einem alternativen Kraftstoff zugeschaltet werden.

In einer weiteren bevorzugten Ausgestaltung des Verfahrens nach vorliegender Erfindung kann der Kraftstoff des zusätzlichen Sekundärkraftstoffsystems mit dem Gaskraftstoff aus den Gasdruckbehältern dem Verbrennungsmotor in einem beliebigen Mischverhältnis oder jeweils einzeln zugeführt werden.

Das in dem gasbetriebenen Verbrennungsmotor-System verwendete Gas liegt in einer weiteren bevorzugten Ausgestaltung des Verfahrens nach vorliegender Erfindung im gasförmigen Aggregatzustand in den Gasdruckbehältern vor, wobei eines von den Gasen wie Erdgas, Wasserstoff, Methan oder eine beliebige Zusammensetzung davon verwendet wird.

Gemäß erfindungsgemäßem Verfahren liegt der in einem Zuführungsstrang des gasbetriebenen Verbrennungsmotor-Systems herrschende Gasdruck vorzugsweise im Bereich von 5 bis 10 bar.

Vorzugsweise kann der wenigstens eine zu entleerende Gasdruckbehälter in einer weiteren bevorzugten Ausgestaltung des Verfahrens nach vorliegender Erfindung auf einen Restdruck von höchstens 2 bar oder weniger entleert werden.

Gemäß einer bevorzugten weiteren Ausgestaltung des Verfahrens nach vorliegender Erfindung kann, nachdem der antreibende Gasdruckbehälter den zu entleerenden Gasdruckbehälter entleert hat und selbst bis auf den normalen Betriebsdruck des Verbrennungsmotors entleert wurde, ein weiteres Entleeren des antreibenden Gasdruckbehälters durch eine herabgesenkte Leistung des Verbrennungsmotors betrieben werden, wobei der Betriebsdruck von etwa 10 bar bis auf 3-4 bar abgesenkt werden kann.

In einer weiteren, noch bevorzugteren Ausgestaltung des Verfahrens nach vorliegender Erfindung wird die herabgesenkte Leistung des Verbrennungsmotors während einer Phase geringerer Beanspruchung, vorzugsweise im Leerlauf des Verbrennungsmotors, ausgenutzt, den antreibenden Gasdruckbehälter bis auf einen niedrigeren als der normale Betriebsdruck Gasdruck zu entleeren.

Nach einem dritten Aspekt vorliegender Erfindung sind ihre Aufgaben durch ein Transportmittel mit einem Gastank-Entleerungs-System nach einer der oben beschriebenen bevorzugten Ausgestaltungen zur Entleerung von Gasdruckbehältern in einem gasbetriebenen Verbrennungsmotor-System gelöst. Das Transportmittel kann hierbei ein Land-, Wasser oder ein Luftfahrzeug sein.

Vorzugsweise wird während einer Phase einer höheren, von dem Verbrennungsmotor abverlangten Leistung seine Kraftstoffversorgung auf den alternativen Kraftstoff umgeschaltet.

Die Erfindung wird nachfolgend in Ausführungsbeispielen anhand der zugehörigen Zeichnungen erläutert. Es zeigen:

Figur 1     eine schematische Darstellung des erfindungsgemäßen Gas-Entleerungs-Systems zur Unterdruckentleerung von Gasdruckbehältern, und

Figur 2     eine Querschnittansicht durch eine Venturi-Düse.

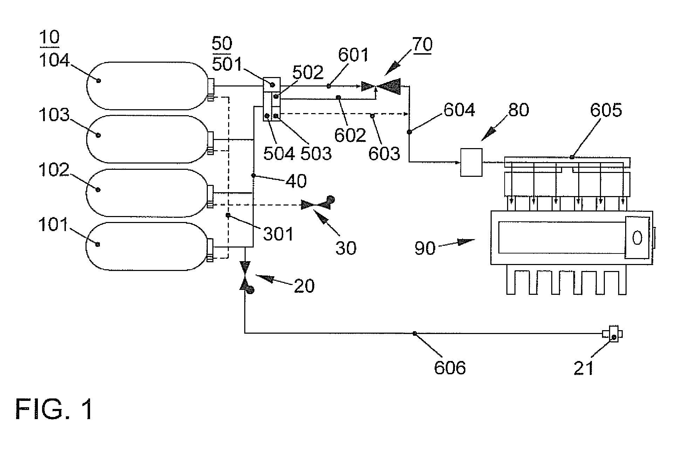

Figur 1 zeigt eine schematische Darstellung des erfindungsgemäßen Gas-Entleerungs-Systems zur Unterdruckentleerung eines aus vier Gasdruckbehältern 101, 102, 103, 104 bestehenden Gaskraftstoff-Speichers 10 in einer besonders bevorzugten Ausgestaltung.

Die Gasdruckbehälter 101, 102, 103, 104 können jeweils gleiche oder verschiedene Volumina aufweisen und sind eingeteilt in wenigstens einen antreibenden Gasdruckbehälter 104 und drei erfindungsgemäß zu entleerende Gasdruckbehälter 101, 102, 103. Die drei zu entleerenden Gasdruckbehälter 101, 102, 103 sind beispielhaft an eine gemeinsame Gasdruckleitung 40 angeschlossen, die ihrerseits an dem Eingang 504 einer Stellventil-Einheit 50 angeschlossen ist.

Bei einem normalen Betrieb des erfindungsgemäßen gasbetriebenen Verbrennungsmotor-Systems 1 sind die zu entleerenden Gasdruckbehälter 101, 102, 103 noch ausreichend mit dem Gaskraftstoff gefüllt, sodass das erfindungsgemäße Entleerungssystem bei dieser Ausgestaltung zunächst inaktiv geschaltet ist. Hierzu ist das erste Ventil 501 der Stellventil-Einheit 50 in Sperrstellung gebracht, sodass der antreibende Gasdruckbehälter 104 von den übrigen, zu entleerenden Gasdruckbehältern 101, 102, 103 und der Kraftstoffleitung 604 abgekoppelt ist. Der antreibende Gasdruckbehälter 104 behält dadurch seinen vollen Gaskraftstoff-Inhalt und Gasdruck, während die drei zu entleerenden Gasdruckbehälter 101, 102, 103 den Betrieb des Verbrennungsmotors 90 speisen und dadurch normal entleert werden.

Außerdem ist das dritte Ventil 503 der Stellventil-Einheit 50 geöffnet, sodass der Gaskraftstoff über die Normalbetriebs-Druckgasleitung 603 aus den zu entleerenden Gasdruckbehältern 101, 102, 103 in die Hochdruckleitung bzw. Kraftstoffleitung 604 direkt fließen kann, wo er zu einem Druckregler 80 geleitet wird. Der Druckregler 80 regelt den Druck des Gaskraftstoffs in dem nach dem Druckregler 80 angeordneten Zuführungsstrang 605 in Abhängigkeit von der Leistung des Verbrennungsmotors 90, die von ihm situationsbedingt abverlangt wird. Der Zuführungsstrang 605 ist somit eine druckgeregelte Betriebsdruckleitung, in welcher beispielsweise je nach Motorlast ein Druck zwischen 4 und 10 bar herrscht. Das zweite Ventil 502 der Stellventil-Einheit 50 kann hierbei je nach Ausführung entweder gesperrt oder geöffnet sein, da in seinem offenen Zustand das Gas über die Entleerungs-Druckgasleitung 602 und die Venturi-Düse 70 in die Kraftstoffleitung 604 fließen kann.

Wenn der Gaskraftstoff in den zu entleerenden Gasdruckbehältern 101, 102, 103 durch den Normalbetrieb bis auf einen Restdruck von etwa 10-12 bar entleert ist, kann kein weiterer Gaskraftstoff mehr mit konventionellen Mitteln aus den Gasdruckbehältern 101, 102, 103 entnommen werden, da für den Betrieb des Verbrennungsmotors der maximale Betriebsdruck von etwa 10 bar erforderlich ist, damit auch bei vorkommenden Leistungsspitzen der Verbrennungsmotor ausreichend mit dem Gaskraftstoff versorgt werden kann.

Zusätzlich weist der Druckregler 80 immer eine konstruktionsbedingte minimale Regeldifferenz auf, die beispielsweise 2 bar betragen kann, sodass der Restdruck in den zu entleerenden Gasdruckbehältern 101, 102, 103 um diese minimale Regeldifferenz höher als der maximale Betriebsdruck liegt, d.h. also beispielsweise 12 bar betragen kann.

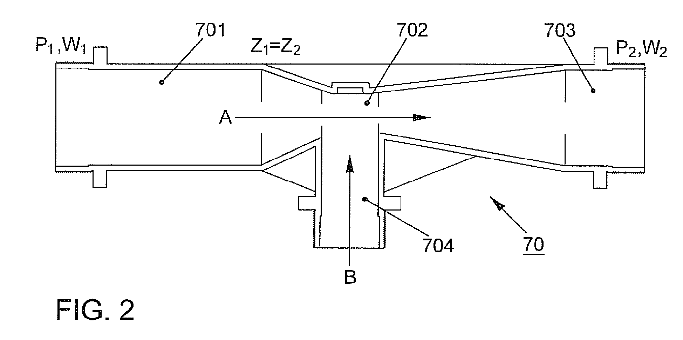

In diesem erreichten Restfüllungs-Zustand schaltet die Stellventil-Einheit 50 das erfindungsgemäße Entleerungssystem ein und stellt gleichzeitig den Normalbetrieb ab. Hierzu wird das dritte Ventil 503 der Stellventil-Einheit 50 und somit die Normalbetriebs-Druckgasleitung 603 gesperrt. Das zweite Ventil 502 der Stellventil-Einheit 50 wird nun geöffnet, wenn es gesperrt war oder geöffnet gelassen, wenn es vorher wie oben beschrieben in alternativer Weise offen gelassen worden ist. Gleichzeitig bzw. ein wenig früher wird das erste Ventil 501 der Stellventil-Einheit 50 geöffnet, wodurch aus dem antreibenden Gasdruckbehälter 104 Gaskraftstoff unter einem hohen Gasdruck über die antreibende Druckgasleitung 601 in die Venturi-Düse 70 fließt. Wie unter Figur 2 beschrieben wird, erzeugt der so bewirkte Hauptstrom aufgrund dynamischer Druckeffekte eine Sogwirkung an dem Ansauganschluss 704 der Venturi-Düse 70. Der so erzeugte Unterdruck in Bezug auf den Gasdruck in dem antreibenden Gasdruckbehälter 104, der antreibenden Druckgasleitung 601 und der Kraftstoffleitung 604 kann unterhalb von 10 bar liegen. Wie tief der erzeugte relative Unterdruck tatsächlich wird, hängt von der Strömungsgeschwindigkeit des Hauptstroms durch die Venturi-Düse 70 und somit von dem Massendurchfluss ab. Das bedeutet, dass je höher die Leistung ist, die der Verbrennungsmotor liefern muss, um so tiefer kann der erzeugte Unterdruck sein. Praktisch erreichbar auf diese Weise sind Druckwerte von ungefähr 2 bar Restdruck in den zu entleerenden Gasdruckbehältern 101, 102, 103, wodurch das Ziel der vorliegenden Erfindung erreicht ist.

Sollte aber aufgrund beispielsweise eines geringen Durchflusses des Hauptstroms durch die Venturi-Düse 70 keine oder eine zu geringe Sogwirkung erzielt werden können, dann kann Gas über die Entleerungs-Druckgasleitung 602 und das offene zweite Ventil 502 der Stellventil-Einheit 50 in Gegenrichtung in die zu entleerenden Gasdruckbehälter 101, 102, 103 fließen, sodass diese aufgefüllt werden würden. Einen solchen unerwünschten Rückfluss kann es auch aufgrund statischer Druckverhältnisse geben, beispielsweise wenn der Druck in dem antreibenden Gasdruckbehälter 104 anfangs 200 bar beträgt, während der Druck in den zu entleerenden Gasdruckbehältern 101, 102, 103 nur 12 bar aufweist und die Dynamik des Hauptstroms durch die Venturi-Düse 70 nicht ausreicht, eine solch große Druckdifferenz zu überbrücken. Diesem Problem begegnet das erfindungsgemäße Entleerungssystem dadurch, dass es nach einer bevorzugten Ausgestaltung eine solche Wiederbeladung der zu entleerenden Gasdruckbehälter 101, 102, 103 zunächst zulässt und im weiteren Betrieb wieder entleert. Dies kann jedoch ein unbefriedigendes Ergebnis liefern, sodass in einer weiteren alternativen bevorzugten Ausgestaltung der vorliegenden Erfindung in der Entleerungs-Druckgasleitung 602 ein Rückschlagventil eingebaut wird, welches eine derartige Wiederbefüllung der zu entleerenden Gasdruckbehälter 101, 102, 103 verhindert (nicht dargestellt).

Zum Befüllen der Gasdruckbehälter 101, 102, 103 und 104 an einer Betankungsanlage ist ein konventionelles Betankungssystems vorgesehen, welches ein Rückschlagventil 20, eine Betankungsleitung 606 und einen Betankungsanschluss 21 aufweist.

Ein Not-Entleerungssystem 30, 301 entspricht dem Stand der Technik und dient dem Entleeren aller Gasdruckbehälter 101 bis 104 in einem Notfall.

Figur 2 zeigt eine Querschnittansicht durch eine Venturi-Düse 70. Ein Hauptstrom A strömt durch den verengten Düsenbereich 702 der Venturi-Düse 70 durch und bewirkt dadurch aufgrund bekannter physikalischer Gesetzmäßigkeit, die unter der Bezeichnung Venturiprinzip bekannt ist, dass in dem quer zum Hauptstrom A angeordneten Ansauganschluss 704 ein Unterdruck erzeugt wird, sodass infolge dieses Unterdrucks ein Nebenstrom B erzeugt wird.

In der vorliegenden Erfindung wird der Ansauganschluss 704 zum Entleeren der Restmenge des Gaskraftstoffs aus den zu entleerenden Gasdruckbehältern 101, 102, 103 mit diesen verbunden. Der Hauptstrom A wird hierbei durch den aus dem antreibenden Gasdruckbehälter 104 strömenden Gaskraftstoff gebildet und hierzu der Eingangsanschluss 701 der Venturi-Düse 70 mit dem antreibenden Gasdruckbehälter 104 verbunden und der Ausgangsanschluss 703 der Venturi-Düse 70 mit der Hochdruck-Gaskraftstoffzuleitung 604 verbunden.

Die Venturi-Düse 70 kann vorzugsweise einstückig als ein Druckgussteil aus Metall oder Kunststoff preiswert hergestellt sein.

Die Auswirkungen der Venturi-Düse 70 können nach bekannten Beziehungen aus der Bernoulli-Gleichung berechnet werden:

$$\frac{w_1^2 \rho}{2} + p_1 + \rho g z_1 = \frac{w_2^2 \rho}{2} + p_2 + \rho g z_2$$

und mit

$$z_1 - z_2 = h$$

$$p_1 - p_2 = \Delta p$$

folgt

$$\Delta p + \rho g h = \frac{1}{2}\rho(w_2^2 - w_1^2) = \frac{1}{2}\rho w_2^2\left(1 - \frac{w_1^2}{w_2^2}\right)$$

Aufgrund der Massenerhaltung gilt:

$$w_1 A_1 = w_2 A_2$$

$$w_1 = \frac{A_2}{A_1} w_2$$

und es gilt weiterhin:

$$\Delta p + \rho g h = \frac{1}{2}\rho w_2^2\left(1 - \left(\frac{A_2}{A_1}\right)^2\right)$$

$$w_2 = \sqrt{\frac{2(\Delta p + \rho g h)}{\rho(1 - (\frac{A_2}{A_1})^2)}}$$

Daraus folgt für den Massenstrom in der Venturi-Düse:

$$\dot{m} = \rho A_2 w_2 = \rho \frac{A_2}{\sqrt{1 - (\frac{A_2}{A_1})^2}} \sqrt{\frac{2}{\rho}(\Delta p + \rho g h)}$$

Die vorangehenden Ausführungen der vorliegenden Erfindung sind lediglich beispielhaft und nicht als die vorliegende Erfindung einschränkend auszulegen. Die vorliegende Erfindungslehre kann leicht auf andere Anwendungen übertragen werden. Die Beschreibung des Ausführungsbeispiels ist zur Veranschaulichung vorgesehen und nicht, um den Schutzbereich der Patentansprüche einzuschränken. Viele Alternativen, Modifikationen und Varianten sind für einen durchschnittlichen Fachmann offensichtlich, ohne dass er hierfür den Schutzumfang der vorliegenden Erfindung verlassen müsste, der in den nachfolgenden Ansprüchen definiert ist.

**Bezugszeichenliste**

| | |
|---|---|
| 1 | gasbetriebenes Verbrennungsmotor-System |
| 10 | Gaskraftstoff-Speicher |
| 101, 102, 103 | zu entleerende Gasdruckbehälter |
| 104 | antreibender Gasdruckbehälter |
| 20 | Rückschlagventil |
| 21 | Betankungsanschluss |
| 30 | Not-Entleerungssystem |
| 301 | Leitung des Not-Entleerungssystems |
| 40 | Druckgasleitung |
| 50 | Stellventil-Einheit |
| 501 | erstes Ventil der Stellventil-Einheit |
| 502 | zweites Ventil der Stellventil-Einheit |
| 503 | drittes Ventil der Stellventil-Einheit |
| 504 | Eingang der Stellventil-Einheit |
| 601 | antreibende Druckgasleitung |
| 602 | Entleerungs-Druckgasleitung |
| 603 | Normalbetrieb-Druckgasleitung |
| 604 | Hochdruckleitung, Kraftstoffleitung |
| 605 | druckgeregelte Betriebsdruckleitung, Zuführungsstrang |
| 606 | Betankungsleitung |
| 70 | Venturi-Düse, Unterdruckerzeugungsmittel |
| 701 | Eingangsanschluss |
| 702 | verengter Düsenbereich |
| 703 | Ausgangsanschluss |
| 704 | Ansauganschluss |
| 80 | Druckregler |
| 90 | Verbrennungsmotor |
| A | Hauptstrom |
| B | Nebenstrom |

**Patentansprüche**

1. Gastank-Entleerungs-System zur Entleerung von Gasdruckbehältern (101, 102, 103, 104) für ein gasbetriebenes Verbrennungsmotor-System (1), aufweisend mehr als einen Gasdruckbehälter (101, 102, 103, 104) und eine Kraftstoffleitung (604),
**dadurch gekennzeichnet, dass**
wenigstens einer der Gasdruckbehälter (101, 102, 103, 104) als ein antreibender Gasdruckbehälter (104) zum Antreiben eines Unterdruckerzeugungsmittels (70) ausgeführt ist, welches zum Rest-Entleeren des wenigstens einen anderen, zu entleerenden Gasdruckbehälters (101, 102, 103) ausgeführt ist.

2. Gastank-Entleerungs-System nach Anspruch 1,
**dadurch gekennzeichnet, dass**
das Unterdruckerzeugungsmittel (70) als wenigstens eine Venturi-Düse (70) ausgeführt ist, die von dem wenigstens einen antreibenden Gasdruckbehälter (104) mit einer Gasströmung in ihrer Hauptflussrichtung (A) durchströmbar ist und einen quer zur Hauptflussrichtung angeordneten Ansauganschluss (704) aufweist.

3. Gastank-Entleerungs-System nach einem der vorhergehenden Ansprüche,
**dadurch gekennzeichnet, dass**
das Unterdruckerzeugungsmittel (70) mit einer Vielzahl von Venturi-Düsen (70) ausgebildet ist, die zueinander parallel angeordnet und mithilfe wenigstens eines Schaltmittels in einer beliebigen Zusammensetzung zuschaltbar ausgeführt sind, wobei die Steuerung der Zuschaltungszusammensetzung der Venturi-Düsen (70) mit der Wirkleistung des Verbrennungsmotors (90) verknüpft ist.

4. Gastank-Entleerungs-System nach Anspruch 2,
**dadurch gekennzeichnet, dass**
die wenigstens eine Venturi-Düse (70) mithilfe einer Stellventil-Einheit (50) derart mit dem wenigstens einen antreibenden Gasdruckbehälter (104) und dem wenigstens einen zu entleerenden Gasdruckbehälter (101, 102, 103) verschaltbar ist, dass bei einem ersten Betriebszustand der antreibende Gasdruckbehälter (104) und die Venturi-Düse (70) von der Kraftstoffleitung (604) abgekoppelt sind und der wenigstens eine zu entleerende Gasdruckbehälter (101, 102, 103) direkt an die Kraftstoffleitung (604) angeschlossen ist, und bei einem zweiten Betriebszustand der antreibende Gasdruckbehälter (104) und die Venturi-Düse (70) an eine antreibende Druckgasleitung (601) angeschlossen sind und der zu entleerende Gasdruckbehälter (101, 102, 103) an den Ansauganschluss (704) der Venturi-Düse (70) angeschlossen ist.

5. Gastank-Entleerungs-System nach Anspruch 4,
**dadurch gekennzeichnet, dass**
die Stellventil-Einheit (50) wenigstens ein 1/3-Wegeventil aufweist.

6. Gastank-Entleerungs-System nach einem der vorhergehenden Ansprüche,
**dadurch gekennzeichnet, dass**
der antreibende Gasdruckbehälter (104) ein geringeres Volumen als ein zu entleerender Gasdruckbehälter (101, 102, 103) aufweist.

7. Verfahren zum Betreiben des Gastank-Entleerungs-System zur Entleerung von Gasdruckbehältern (101, 102, 103, 104) für ein gasbetriebenes Verbrennungsmotor-System (1), aufweisend mehr als einen Gasdruckbehälter (101, 102, 103, 104) und eine Kraftstoffleitung (604), wobei wenigstens einer der Gasdruckbehälter (101, 102, 103, 104) als ein antreibender Gasdruckbehälter (104) zum Antreiben eines Unterdruckerzeugungsmittels (70) ausgeführt ist,
**dadurch gekennzeichnet, dass** das Unterdruckerzeugungsmittel (70) zum Rest-Entleeren des oder der zu entleerenden Gasdruckbehälter (101, 102, 103) verwendet wird.

8. Verfahren nach Anspruch 7,
**dadurch gekennzeichnet, dass**
der in dem gasbetriebenen Verbrennungsmotor-System verwendete Gaskraftstoff Erdgas, Wasserstoff, Methan oder ein Gemisch derselben ist.

9. Verfahren nach Anspruch 7 oder 8,
**dadurch gekennzeichnet, dass**
der in einem Zuführungsstrang (605) des gasbetriebenen Verbrennungsmotor-Systems herrschende Gasdruck im Bereich von 10 bar liegt.

10. Verfahren nach einem der Ansprüche 7 bis 9,
    **dadurch gekennzeichnet, dass**
    der wenigstens eine zu entleerende Gasdruckbehälter (101, 102, 103) auf einen Restdruck von höchstens 2 bar oder darunter entleert wird.

11. Verfahren nach einem der vorhergehenden Ansprüche,
    **dadurch gekennzeichnet, dass**
    nachdem der antreibende Gasdruckbehälter (104) den oder die zu entleerenden Gasdruckbehälter (101, 102, 103) entleert hat und selbst bis auf den normalen Betriebsdruck des Verbrennungsmotors (90) entleert wurde, ein weiteres Entleeren des antreibenden Gasdruckbehälters (104) durch eine herabgesenkte Leistung des Verbrennungsmotors (90) betrieben wird, wobei der Betriebsdruck von etwa 10 bar auf 3 bis 4 bar abgesenkt wird.

12. Verfahren nach Anspruch 11,
    **dadurch gekennzeichnet, dass**
    die herabgesenkte Leistung des Verbrennungsmotors (90) während einer Phase geringerer Beanspruchung dazu ausgenutzt wird, den antreibenden Gasdruckbehälter (104) zu entleeren.

13. Verfahren nach Anspruch 12,
    **dadurch gekennzeichnet, dass**
    ein zusätzliches Sekundärkraftstoffsystem zum Speisen des Verbrennungsmotor-Systems mit einem alternativen Kraftstoff vorhanden ist und während einer Phase einer höheren, von dem Verbrennungsmotor (90) abverlangten Leistung seine Kraftstoffversorgung auf den alternativen Kraftstoff umgeschaltet wird oder der Kraftstoff des zusätzlichen Sekundärkraftstoffsystems dem Verbrennungsmotor (90) in einem beliebigen Mischverhältnis mit dem Gaskraftstoff aus den Gasdruckbehältern (101, 102, 103, 104) zugeführt wird.

14. Transportmittel mit einem Gastank-Entleerungs-System nach einem der Ansprüche 1 bis 6 zur Entleerung von Gasdruckbehältern (101, 102, 103, 104) für ein gasbetriebenes Verbrennungsmotor-System (1).


**Claims**

1. Gas tank emptying system for emptying gas pressure containers (101, 102, 103, 104) for a gas-operated internal combustion engine system (1), having more than one gas pressure container (101, 102, 103, 104) and a fuel line (604),
   **characterized in that**
   at least one of the gas pressure containers (101, 102, 103, 104) is designed as a driving gas pressure container (104) for driving a vacuum-generating means (70) which is designed for the residual emptying of the at least one other gas pressure container (101, 102, 103) to be emptied.

2. Gas tank emptying system according to Claim 1,
   **characterized in that**
   the vacuum-generating means (70) is designed as at least one venturi nozzle (70) through which a gas flow can flow in the main flow direction (A) thereof from the at least one driving gas pressure container (104), and which has an intake connection (704) arranged transversely with respect to the main flow direction.

3. Gas tank emptying system according to either of the preceding claims,
   **characterized in that**
   the vacuum-generating means (70) is formed with a multiplicity of venturi nozzles (70) which are arranged parallel to one another and are designed to be able to be switched on with the aid of at least one switching means in any configuration, wherein the control of the switching-on configuration of the venturi nozzles (70) is linked to the operative power of the internal combustion engine (90).

4. Gas tank emptying system according to Claim 2,
   **characterized in that**
   the at least one venturi nozzle (70) is connectable with the aid of a control valve unit (50) to the at least one driving gas pressure container (104) and to the at least one gas pressure container (101, 102, 103) to be emptied, in such a manner that, in a first operating state, the driving gas pressure container (104) and the venturi nozzle (70) are decoupled from the fuel line (604) and the at least one gas pressure container (101, 102, 103) to be emptied is directly connected to the fuel line (604), and, in a second operating state, the driving gas pressure container (104) and the venturi nozzle (70) are connected to a driving compressed gas line (601), and the gas pressure container (101, 102, 103) to be emptied is connected to the intake connection (704) of the venturi nozzle (70).

5. Gas tank emptying system according to Claim 4,
   **characterized in that**
   the control valve unit (50) has at least one 1/3-way directional control valve.

6. Gas tank emptying system according to one of the preceding claims,
   **characterized in that**
   the driving gas pressure container (104) has a smaller volume than a gas pressure container (101, 102, 103) to be emptied.

7. Method for operating the gas tank emptying system for emptying gas pressure containers (101, 102, 103, 104) for a gas-operated internal combustion engine system (1), having more than one gas pressure container (101, 102, 103, 104) and a fuel line (604), wherein at least one of the gas pressure containers (101, 102, 103, 104) is designed as a driving gas pressure container (104) for driving a vacuum-generating means (70), **characterized in that** the vacuum-generating means (70) is used for the residual emptying of the gas pressure container or the gas pressure containers (101, 102, 103) to be emptied.

8. Method according to Claim 7,
   **characterized in that**
   the gas fuel used in the gas-operated internal combustion engine system is natural gas, hydrogen, methane or a mixture thereof.

9. Method according to Claim 7 or 8,
   **characterized in that**
   the gas pressure prevailing in a supply train (605) of the gas-operated internal combustion engine system lies within the range of 10 bar.

10. Method according to one of Claims 7 to 9,
    **characterized in that**
    the at least one gas pressure container (101, 102, 103) to be emptied is emptied to a residual pressure of at most 2 bar or thereunder.

11. Method according to one of the preceding claims, **characterized in that**
    after the driving gas pressure container (104) has emptied the gas pressure container or the gas pressure containers (101, 102, 103) to be emptied except for the normal operating pressure of the internal combustion engine (90), further emptying of the driving gas pressure container (104) is operated by a reduced power of the internal combustion engine (90), wherein the operating pressure of approximately 10 bar is reduced to 3 to 4 bar.

12. Method according to Claim 11,
    **characterized in that**
    the reduced power of the internal combustion engine (90) is used during a phase of lower stress in order to empty the driving gas pressure container (104).

13. Method according to Claim 12,
    **characterized in that**
    there is an additional secondary fuel system for feeding the internal combustion engine system with an alternative fuel, and, during a phase of higher power required by the internal combustion engine (90), the fuel supply thereof is switched over to the alternative fuel, or the fuel of the additional secondary fuel system is supplied to the internal combustion engine (90) in any mixing ratio with the gas fuel from the gas pressure containers (101, 102, 103, 104).

14. Means of transportation with a gas tank emptying system according to one of Claims 1 to 6 for emptying gas pressure containers (101, 102, 103, 104) for a gas-operated internal combustion engine system (1).

**Revendications**

1. Système de vidage de réservoir de gaz destiné à vider des récipients à gaz sous pression (101, 102, 103, 104) pour un système de moteur à combustion interne fonctionnant au gaz (1), présentant plus qu'un récipient à gaz sous pression (101, 102, 103, 104) et une conduite de carburant (604), **caractérisé en ce qu'**au moins un des récipients à gaz sous pression (101, 102, 103, 104) est réalisé sous la forme d'un récipient à gaz sous pression d'entraînement (104) pour l'entraînement d'un moyen de production de dépression (70), qui est conçu pour le vidage résiduel dudit au moins un autre récipient à gaz sous pression à vider (101, 102, 103).

2. Système de vidage de réservoir de gaz selon la revendication 1, **caractérisé en ce que** le moyen de production de dépression (70) est réalisé sous la forme d'au moins une tuyère de Venturi (70), qui peut être traversée dans sa direction d'écoulement principale (A) avec un écoulement de gaz provenant dudit au moins un récipient à gaz sous pression d'entraînement (104) et présente un raccord d'aspiration (704) disposé transversalement à la direction d'écoulement principale.

3. Système de vidage de réservoir de gaz selon l'une quelconque des revendications précédentes, **caractérisé en ce que** le moyen de production de dépression (70) est réalisé avec une multiplicité de tuyères de Venturi (70), qui sont disposées parallèlement l'une à l'autre et qui peuvent être connectées en toute combinaison désirée à l'aide d'au moins un moyen de commutation, dans lequel la commande de la combinaison connectée des tuyères de Venturi (70) est liée à la puissance utile du moteur à combustion interne (90).

4. Système de vidage de réservoir de gaz selon la revendication 2, **caractérisé en ce que** ladite au moins une tuyère de Venturi (70) peut être connectée à l'aide d'une unité de vanne de réglage (50) au récipient à gaz sous pression d'entraînement (104) et audit au moins un récipient à gaz sous pression à vider (101, 102, 103), de telle manière que, dans un premier état de fonctionnement, le récipient à gaz sous pression d'entraînement (104) et la tuyère de Venturi (70) soient déconnectés de la conduite de carburant (604) et que ledit au moins un récipient à gaz sous pression à vider (101, 102, 103) soit raccordé directement à la conduite de carburant (604), et que, dans un deuxième état de fonctionnement, le récipient à gaz sous pression d'entraînement (104) et la tuyère de Venturi (70) soient raccordés à une conduite de gaz sous pression d'entraînement (601) et que le récipient à gaz sous pression à vider (101, 102, 103) soit connecté au raccord d'aspiration (704) de la tuyère de Venturi (70).

5. Système de vidage de réservoir de gaz selon la revendication 4, **caractérisé en ce que** l'unité de vanne de réglage (50) présente au moins une vanne à 1/3 voies.

6. Système de vidage de réservoir de gaz selon l'une quelconque des revendications précédentes, **caractérisé en ce que** le récipient à gaz sous pression d'entraînement (104) présente un plus petit volume qu'un récipient à gaz sous pression à vider (101, 102, 103).

7. Procédé de fonctionnement du système de vidage de réservoir de gaz destiné à vider des récipients à gaz sous pression (101, 102, 103, 104) pour un système de moteur à combustion interne fonctionnant au gaz (1), présentant plus qu'un récipient à gaz sous pression (101, 102, 103, 104) et une conduite de carburant (604), **caractérisé en ce qu'**au moins un des récipients à gaz sous pression (101, 102, 103, 104) est réalisé sous la forme d'un récipient à gaz sous pression d'entraînement (104) pour l'entraînement d'un moyen de production de dépression (70), qui est conçu pour le vidage résiduel dudit au moins un autre récipient à gaz sous pression à vider (101, 102, 103).

8. Procédé selon la revendication 7, **caractérisé en ce que** le carburant gazeux utilisé dans le système de moteur à combustion interne fonctionnant au gaz (1) est le gaz naturel, l'hydrogène, le méthane ou un mélange de ceux-ci.

9. Procédé selon la revendication 7 ou 8, **caractérisé en ce que** la pression de gaz régnant dans une ligne d'alimentation (605) du système de moteur à combustion interne fonctionnant au gaz est de l'ordre de 10 bar.

10. Procédé selon l'une quelconque des revendications 7 à 9, **caractérisé en ce que** ledit au moins un récipient à gaz sous pression à vider (101, 102, 103) est vidé jusqu'à une pression résiduelle au maximum de 2 bar ou moins.

11. Procédé selon l'une quelconque des revendications précédentes, **caractérisé en ce que**, après que le récipient à gaz sous pression d'entraînement (104) ait vidé le ou les récipient(s) à gaz sous pression à vider (101, 102, 103) et qu'il se soit lui-même vidé jusqu'à la pression de fonctionnement normale du moteur à combustion interne (90), on opère un vidage complémentaire du récipient à gaz sous pression d'entraînement (104) par une puissance abaissée du moteur à combustion interne (90), dans lequel la pression de fonctionnement est abaissée d'environ 10 bar à 3 à 4 bar.

**12.** Procédé selon la revendication 11, **caractérisé en ce que** l'on utilise la puissance abaissée du moteur à combustion interne (90) pendant une phase de moindre charge, pour vider le récipient à gaz sous pression d'entraînement (104).

**13.** Procédé selon la revendication 12, **caractérisé en ce qu'**il se trouve un deuxième système de carburant secondaire supplémentaire pour alimenter le système de moteur à combustion interne avec un carburant alternatif et, pendant une phase d'une demande de puissance accrue du moteur à combustion interne (90), son alimentation en carburant est commutée sur le carburant alternatif ou le carburant du système de carburant secondaire supplémentaire est fourni au moteur à combustion interne (90) en un rapport de mélange quelconque avec le carburant gazeux provenant des récipients à gaz sous pression (101, 102, 103, 104).

**14.** Moyen de transport avec un système de vidage de réservoir de gaz selon l'une quelconque des revendications 1 à 6 destiné à vider des récipients à gaz sous pression (101, 102, 103, 104) pour un système de moteur à combustion interne fonctionnant au gaz (1).

FIG. 1

$P_1,W_1$    701    $Z_1=Z_2$    702    703    $P_2,W_2$

A

B

704

70

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69927179 T2
- DE 10301159